# EUROPEAN PATENT APPLICATION

(11) **EP 3 668 084 A1**
(43) Date of publication of application: **17.06.2020**
(21) Application number: 18212733.2
(22) Date of filing: 14.12.2018
(51) Int. Cl.: H04N 5/355, H04N 5/372

(54) **A METHOD FOR CONTROLLING TIME DELAY AND INTEGRATION IMAGING AND AN IMAGING SENSOR FOR TIME DELAY AND INTEGRATION IMAGING**

(71) Applicant: IMEC vzw, 3001 Leuven (BE)
(72) Inventor: ROSMEULEN, Maarten, 3001 Leuven (BE); BOULENC, Pierre, 3001 Leuven (BE)
(74) Representative: AWA Sweden AB

(57) **Abstract**

A method for controlling time delay and integration, TDI, imaging comprises: acquiring (102) image information using an array of pixels (20) being arranged in rows (16) and columns (18), wherein each pixel (20) is configured to generate an electric charge proportional to intensity of electromagnetic radiation incident on the pixel (20) and wherein the pixels (20) are configured to transfer generated charges along columns (18) of the array for accumulating the generated charges in the pixels (20) along the columns (18) from a first row (16a) towards a second row (16i) in the array of pixels (20); at an intermediate row (16b) between the first (16a) and the second row (16i), non-destructively sensing (104) a signal level of accumulated charges in at least one column (18); and at the second row (16i), destructively sensing (108) a signal level of accumulated charges in the at least one column (18).

## Description

### Technical field

The present inventive concept relates to time delay and integration imaging. In particular, the present inventive concept relates to a method for controlling time delay and integration imaging and an imaging sensor for time delay and integration imaging.

### Background

Time delay and integration (TDI) image sensing is a popular technique used for inspection of scenes with inherent linear motion such as in machine vision or earth observation. TDI image sensing may be particularly useful in light starved applications with low irradiance on the focal plane, typically a consequence of imaging faint objects and/or high speed imaging requirements, since integration of the low irradiance levels is allowed.

In TDI imaging, charges generated by light being incident on a pixel may be transferred along columns in an array of pixels of an imaging device in synchronization with a movement of the imaging device in relation to the scene. This implies that the charges may be accumulated (integrated) over time in the columns of the array so as to enable acquiring image information with a high signal-to-noise ratio.

If a high intensity of light is received in imaging of a scene, the accumulated charges may cause saturation of light-sensitive pixels. Thus, a dynamic range of an acquired image may be limited by a need for avoiding saturation of pixels.

In US 6,472,653, an apparatus is disclosed that is able to extend the intra-scene dynamic range of Time Delay and Integrate Charge-Coupled Device imagers. The charge collected and accumulated over a plurality of photosensitive devices is limited by adjusting the barrier levels at which collected accumulated charge is removed from the photosensitive devices. By limiting the amount of accumulated charge that is collected, images of high intensity are prevented from overflowing or saturating the photosensitive devices. Blooming barrier levels are adjusted in a step-wise linear manner to allow a known amount of charge to be retained during the initial collection phase while allowing progressively greater amounts of charge to be retained as the collection phase proceeds. This stepped increase in barrier level causes the imager to compress highly intense images to prevent saturation during the initial collection phase, while not influencing the response to images of lower intensity.

Thus, the apparatus is able to image both highly intense images and images of lower intensity. However, the apparatus is still configured to operate in a common manner for each column of the imager. Therefore, there may still be a need to improve a dynamic range of a TDI imaging sensor for handling large intensity differences within a single image.

### Summary

An objective of the present inventive concept is to enable improving a dynamic range in TDI imaging.

These and other objectives of the present inventive concept are at least partly met by the invention as defined in the independent claims. Preferred embodiments are set out in the dependent claims.

According to a first aspect, there is provided a method for controlling time delay and integration (TDI) imaging, said method comprising: acquiring image information using an array of pixels being arranged in rows and columns, wherein each pixel is configured to generate an electric charge proportional to intensity of electro-magnetic radiation incident on the pixel and wherein the pixels are configured to transfer generated charges along columns of the array for accumulating the generated charges in the pixels along the columns from a first row in the array of pixels towards a second row in the array of pixels; at an intermediate row between the first and the second row, non-destructively sensing a signal level of accumulated charges in at least one column; and at the second row, destructively sensing a signal level of accumulated charges in the at least one column.

According to the method, generated charges in a column of pixels may be non-destructively sensed at an intermediate row and destructively sensed at another row. The non-destructive sensing of generated charges allows a signal level to be sensed without destroying possibilities of continuing accumulation of charges. The non-destructive sensing of generated charges may therefore be used, in several different manners, in order to improve read-out of image information and interpretation of read out signal levels so as to acquire an image with a high dynamic range.

The non-destructive sensing may be used differently for different columns, which implies that the method may allow different sensing conditions to be used for different columns. This implies that the dynamic range of an image may be substantially improved as the method may allow sensing very high intensity levels as well as very low intensity levels.

The non-destructive sensing of a signal level may allow determining a signal level being accumulated in a column, such that the non-destructive sensing may provide an indication whether the charges accumulated in the column are close to reaching a saturation level. Thus, it is possible to determine whether a column is about to saturate without destructively sensing the generated charges so that accumulation may be continued if the amount of charges is well below the saturation level.

The non-destructive sensing may not be as accurate as a destructive sensing of the signal level of accumulated charges. Thus, the non-destructive sensing may be used as an input to decide whether destructive sensing of the signal level in a column should be performed or whether the accumulation of charges should be continued in further pixels. In this regard, a destructive sensing may be available within an array of pixels, such that the destructive sensing may be triggered for columns which are about to saturate, while accumulation of charges is continued for columns for which the amount of charges is well below the saturation level.

Thus, according to the method, it is possible to ensure that signal levels of accumulated charges are read out when a relatively high signal level has been reached, such that the signal may be read with a high signal-to-noise ratio. Further, the reading out of the signal level may be controlled for each column based on intermediate non-destructive read-out of a signal level such that the method may allow sensing of substantially different signal levels providing a high dynamic range of an acquired image.

The method may be implemented in various different ways for providing a high signal level to be detected. As mentioned above, sensing may be triggered when a signal level is close to saturation. However, according to an alternative, the signal level may be controlled not to saturate in another manner. For instance, a portion of the generated charges may be selectively drained based on the non-destructive sensing of the signal level. Of course, the draining of charges may be taken into account when forming an image based on later destructively sensing of the signal level in the column.

Further, the non-destructive and destructive sensing of signal levels may enable sensing of different signal levels using different number of TDI stages (pixels through which charges are accumulated). The plural signal levels for each column may be provided in a common dataset relating to an acquired image. Then, a data processor may select which signal level to be used in forming the image such that a high signal level which has not saturated could be used.

It should be realized that the "first row" in the array and the "second row" in the array may be separated such that there are one or more rows between the first row and the second row. Generated charges may be accumulated by being transferred from pixels in one row to the pixels in the adjacent row. Thus, the generated charges may be accumulated from the first row towards the second row by means of charges being generated in a plurality of rows and transferred along columns through the plurality of rows between the first row and the second row.

The electro-magnetic radiation may be detected by means of the array of pixels being moved in relation to a scene. Thus, a scene may be imaged onto different parts of the array and the charges generated by the incident electro-magnetic radiation may be accumulated while the scene moves in relation to the array. The scene may initially be imaged onto a top row of the array and may be imaged onto different rows until finally being imaged onto a bottom row of the array.

In this application, rows may be defined to be "above" or "below" each other in relation to a direction of charges being transferred through the array. Thus, a row that is above another row, receives electro-magnetic radiation from the scene before the other row.

The first row may be the top row of the array, such that light from a scene will first be incident on the first row of the array, when the array is moved in relation to the scene for TDI imaging. However, the first row may alternatively be arranged within the array of pixels. For instance, the first row may be below a row that is associated with destructive sensing of a signal level.

The second row may be the bottom row of the array. The second row may be associated with read-out circuitry for destructively sensing the signal level of charges being accumulated through a column to reach the bottom row of the array. In one embodiment, the first row and the second row may be the top row and bottom row of the array, such that charges are accumulated through the entire array for TDI imaging.

However, the second row may be arranged within the array of pixels such that destructive sensing of the signal level may be performed within the array. The destructive sensing could then be selectively triggered in dependence of a signal level sensed by the non-destructive sensing at the intermediate row between the first row and the second row.

Destructive sensing may be available at a plurality of rows such that a decision whether destructive sensing is to be performed may be taken based on a signal level that is non-destructively sensed. Thus, it may be possible to accurately read out image information at multiple positions within the array so as to enable reading out image information at a row where the signal level of accumulated charges is high (e.g. close to a saturation level).

Also, non-destructive sensing may be available at a plurality of rows. For instance, a non-destructive sensing may be provided one or more rows above each row which is associated with destructive sensing. Thus, the non-destructive sensing may be used for controlling whether destructive sensing is to be made at the second row close to the intermediate row in which the non-destructive sensing was made.

According to an embodiment, the destructive sensing at the second row is used for reading out image information from the at least one column and wherein the method further comprises controlling read out of image information from the at least one column in dependence of the signal level non-destructively sensed at the intermediate row.

Thus, the non-destructive sensing of the signal level at the intermediate row may thus be used for controlling read out of image information. This implies that the sensed signal level may be used as input for deciding whether destructive read-out of image information is to be performed at the second row or for controlling properties in the destructive read-out.

According to an embodiment, said controlling comprises adjusting a gain setting for reading out the image information of the at least one column.

The gain setting may affect signal-to-noise ratio and also affect a maximum signal level that may be read out from a pixel, e.g. a voltage swing that is available in a read transistor. Thus, the non-destructive sensing of the signal level may be used for adjusting the gain setting such that the destructive read-out may determine the signal level with a high signal-to-noise ratio while not exceeding an available voltage swing of the read transistor.

The gain setting may be adjusted by changing a capacitance of a floating diffusion node used for reading out image information. The capacitance may be reduced in order to increase conversion gain in reading out image information.

Alternatively or additionally, the controlling may comprise changing a gain of analog pre-amplifier (or attenuation) stages at the input of an analog-to-digital converter.

According to an embodiment, the method further comprises reading out image information available in the at least one column at the intermediate row.

The non-destructive sensing of the signal level may compare the signal level in relation to a single threshold. Thus, the non-destructive sensing may simply determine whether the signal level exceeds a threshold, which may be an indication that the accumulated charges are close to a saturation level such that an action may need to be taken in order for the signal not to saturate and information to be lost.

However, the non-destructive sensing of the signal level may alternatively sense the signal level in a more accurate manner. For instance, the signal level may be digitized using an analog-to-digital converter which may digitize the signal level using a plurality of bits (such as 8, 10, or 12 bits). Thus, the non-destructively sensed signal level may be used as image information, which could be used as a reading of image information for a column if the signal in the column is saturated before reaching the second row.

According to another embodiment, the controlling further comprises, in dependence of the non-destructively sensed signal level exceeding a threshold, selectively reading out image information at the second row.

Thus, the signal level that is non-destructively sensed may indicate whether the signal in the column is about to be saturated. Then, read-out of image information may be selectively triggered for the column at the second row so that the signal level may be read out before being saturated. In such embodiment, the second row may be arranged within the array of pixels such that, if destructive read-out is not triggered for a column, the accumulation of charges is continued through further rows below the second row and the signal may be read out at another row in the array (e.g. at the bottom row).

According to an embodiment, the method further comprises splitting the accumulated charges of the at least one column at the intermediate row into at least two charge packages.

The splitting of charges into at least two charge packages implies that an amount of accumulated charges in pixels may be reduced so as to avoid saturation. For instance, one of the charge packages may be drained, whereas another charge package may continue to be accumulated and later used for reading out image information.

Alternatively, the split charge packages may be separately read out, possibly with further accumulation of charges after the splitting of the charge packages. For instance, one charge package may be destructively sensed, while another charge package may be transferred to a row below for further accumulation of charges. Thus, the splitting of charge packages may ensure that a pixel is not saturated and that a plurality of readings may be performed in order to determine an image value for the column.

When forming an image based on read out image information, the splitting of charges may be taken into account so as to determine an intensity value which is representative of an intensity of received electro-magnetic radiation. For instance, the accumulated charges may be split into known fractions, which may allow determining a value representative of a total intensity received even if only a fraction of the intensity is read out.

The splitting of charges may be performed in dependence of a signal level that is non-destructively sensed at the intermediate row. Thus, the accumulated charges may only be split for columns in which the amount of accumulated charges is close to a saturation level. However, it should be realized that accumulated charges may be split regardless of the non-destructively sensed signal level. The read out image information may then be processed in relation to charges being split into at least two charge packages.

The generated charges may be transferred along at least one column to reach the second row. According to an embodiment, the controlling may comprise, in dependence of the sensed signal level being below a threshold, transferring generated charges along the at least one column for accumulating the generated charges in the pixels along the column from the second row towards a further row.

Thus, if the non-destructive sensing reveals that a signal level is relatively low and that a risk of saturation is low, accumulation may be continued in further pixels along the column and hence, destructive read-out at the second row may be inactivated.

According to an embodiment, the non-destructive sensing is performed for each column and wherein the columns are separately controlled.

Thus, the signal level is non-destructively sensed in each column, which may be used for detecting a risk of saturation of the generated charges in each column. The read-out of image information may be controlled for each column in dependence of the non-destructively sensed signal level. For instance, different decisions regarding read-out of image information at the second row may be taken for different columns or different gain settings may be used for different columns.

The separate control of columns may ensure a high dynamic range of an acquired image.

According to an embodiment, the non-destructive sensing of the signal level is performed in a plurality of intermediate rows.

Thus, the signal level may be non-destructively sensed in a plurality of rows within the array. Hence, a signal level may be monitored in order to determine whether the signal level is close to a saturation level.

The non-destructive sensing in a plurality of intermediate rows may be used as image information, which may be selected by a data processor as image data to be used (instead of destructively read out image information of a saturated signal level).

One or more of the intermediate rows in which non-destructive sensing is performed may be associated with a row in which destructive sensing may be performed. Thus, when the non-destructive sensing identifies that a high signal level, e.g. a signal level close to saturation, is accumulated in the column, destructive sensing in the associated row may be triggered in order to enable reading out image information before the accumulated charges have exceeded a saturation level.

In an embodiment, the intermediate rows may be periodically arranged in the array. This may imply that the signal level may be monitored at regular intervals.

According to a second aspect, there is provided an imaging sensor for time delay and integration, TDI, imaging, said imaging sensor comprising: an array of pixels being arranged in rows and columns, wherein each pixel is configured to generate an electric charge proportional to intensity of electro-magnetic radiation incident on the pixel and wherein the pixels are configured to transfer generated charges along columns of the array for accumulating the generated charges in the pixels along the columns from a first row in the array of pixels towards a second row in the array of pixels; a non-destructive read-out structure associated with an intermediate row within the array of pixels; said read-out structure being configured to sense a signal level of accumulated charges in at least one column at the intermediate row; a destructive read-out structure for reading out TDI signals for the at least one column corresponding to accumulated charges in the pixels along the column.

Effects and features of this second aspect are largely analogous to those described above in connection with the first aspect. Embodiments mentioned in relation to the first aspect are largely compatible with the second aspect.

Thanks to the read-out structure for non-destructive sensing of a signal level of accumulated charges, the imaging sensor may acquire information of a signal level in a column. The signal level may provide information for deciding whether the signal need to be read out for forming an image or whether further accumulation may be performed. Thus, the imaging sensor may allow controlling destructive read-out such that the read-out may be adapted to the signal level and that a high dynamic range of intensity levels may be detected using the imaging sensor. Also or alternatively, the non-destructive sensing may provide information on a signal level which may be used as image information to replace or complement image information that is destructively read out, e.g. if the signal level that is destructively read out has saturated.

According to an embodiment, the imaging sensor further comprises a controller for controlling read-out of the TDI signal, said controller being configured to control read-out of the TDI signal in dependence of the signal level sensed by the non-destructive read-out structure at the intermediate row.

The controller may thus ensure that the destructive read-out of the TDI signal may be adapted or selectively performed. The controller may receive the signal level sensed by the non-destructive read-out structure as input to the control. This implies that the sensed signal level may be used as input for deciding whether destructive read-out of image information is to be performed at the second row or for controlling properties in the destructive read-out.

According to an embodiment, the controller is configured to control a gain setting for the destructive read-out structure in dependence of the signal level sensed by the non-destructive read-out structure.

Thus, the gain setting for the destructive read-out structure may be adapted to the sensed signal level, such that a sensitivity of the destructive read-out structure may fit the signal level that is to be detected.

In an embodiment, the controller is configured to transmit a control signal for changing a capacitance of a floating diffusion node of the destructive read-out structure. By reducing the capacitance, conversion gain in reading the TDI signal is increased.

According to an embodiment, the non-destructive read-out structure comprises at least one floating gate amplifier associated with the at least one column.

In the floating gate amplifier, a clocking electrode for transferring charges from a pixel may be left floating and may be connected to a gate of a transistor. When a charge packet corresponding to accumulated charges is arranged in the pixel, the charge package will modulate a gate potential of the gate to which the clocking electrode is connected. This may pull down a voltage on the floating gate allowing a signal level to be detected. The charge packet may be transferred to an adjacent pixel in the column by changing a reference voltage to the gate. This implies that the charge packet may be transferred along the column such that the sensing may be performed in a non-destructive manner.

Using the floating gate amplifier, the signal level may be sensed in a convenient manner without the accumulated charges being moved from the pixel, such that the signal level may be non-destructively sensed.

According to an embodiment, the destructive read-out structure comprises at least one floating diffusion node associated with the at least one column.

Thus, the destructive read-out structure may be configured to receive the accumulated charge in a floating diffusion, allowing the signal level to be accurately sensed. The signal in the floating diffusion may be read out through a floating diffusion amplifier.

The destructive read-out may for instance use correlated double sampling, in order to enable reading the signal level with an improved signal-to-noise ratio.

According to an embodiment, the imaging sensor is configured to read out the TDI signal at the intermediate row.

This implies that the imaging sensor may be controlled such that, when the non-destructively sensed signal level indicates that the accumulated charges are close to a saturation level, the TDI signal may be read out.

According to an embodiment, the imaging sensor comprises a plurality of non-destructive read-out structures, each non-destructive read-out structure being associated with a unique intermediate row of a plurality of intermediate rows.

Thus, the signal level may be non-destructively sensed in a plurality of rows within the array. For instance, the intermediate rows may be periodically arranged in the array so that a signal level may be regularly monitored during integration of the signal so as to enable determining when the signal level is becoming close to a saturation level. This implies that the imaging sensor may enable accurate control of reading out of TDI signals, such that TDI signals may be read when the signal level is close to the saturation level.

According to an embodiment, the imaging sensor further comprises at least one analog-to-digital converter (ADC) wherein the destructive read-out structure is connected to the at least one ADC, and wherein the controller is configured to control a level of a TDI signal read out by the destructive read-out structure and transferred to the at least one ADC based on a resolution of the ADC.

Thus, the imaging sensor may be configured to form a digital representation of the signals read out, which may facilitate further processing of the signals and e.g. forming a digital image based on the detected levels of incident electro-magnetic radiation.

The signal provided to the ADC may be adapted to the resolution of the ADC, such that a relatively high signal level may be provided to the ADC for forming the digital representation. The ADC may be associated with a gain stage before the signal reaches the ADC. Since at least a rough estimate of the signal level may be known based on non-destructive sensing of the signal level, a gain of the gain stage could be controlled in dependence of the expected signal level before the signal reaches the ADC.

### Brief description of the drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Fig. 1 is a schematic view of time delay and integration imaging.
Fig. 2 is a schematic view of an imaging sensor according to an embodiment.
Fig. 3 is a schematic view of a destructive read-out structure.
Fig. 4 is a schematic view of a non-destructive read-out structure.
Fig. 5 is a schematic view of an imaging sensor illustrating forming of image information.
Fig. 6 is a flow chart of a method according to an embodiment.

### Detailed description

Detailed embodiments of the present inventive concept will now be described with reference to the drawings.

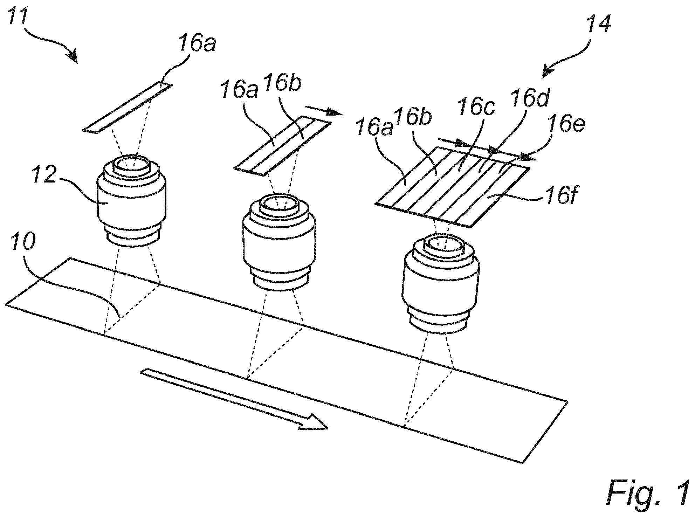

Referring to Fig. 1, a principle of time delay and integration (TDI) imaging will first be described. An object or scene 10 is imaged by a device 11 for TDI imaging, which may comprise an optical system 12 and an imaging sensor 14, wherein the optical system 12 forms an image of the scene 10 onto the imaging sensor 14. The scene 10 moves in relation to the imaging sensor 14, wherein the movement may be due to the scene 10 moving, the device for imaging 11 or the imaging sensor 14 moving or both the object 10 and the imaging sensor 14 moving. For instance, the imaging sensor 14 may be arranged in an airplane in flight and ground below the airplane may be imaged onto the imaging sensor 14, or a stationary imaging sensor 14 may be arranged to image objects 10 on a moving conveyor belt.

The imaging sensor 14 may comprise an array of pixels 20 being arranged in rows 16 and columns 18.

During a first exposure period, a part of the scene 10 is imaged onto a first row 16a of pixels in the array. During exposure, an electric charge is accumulated in proportion to an intensity of incident light in the first row 16a of pixels. The accumulated charge is then transferred to a further row 16b of pixels. Simultaneously, the scene 10 moves in relation to the imaging sensor 14 such that the part of the scene 10 is now imaged onto the further row 16b of pixels in a second exposure period. The accumulated charges in the further row 16b of pixels during the second exposure period may thus be added to the accumulated charges received from the first row 16a of pixels. This procedure may be repeated while the scene 10 is imaged on a plurality of rows 16a-f of pixels such that integration of accumulated charges from a plurality of rows 16a-f of pixels occurs, providing a long exposure time for imaging of the scene 10. This principle may for instance be of interest in light-starved applications, where integration allows a signal of interest to be detectable over noise levels.

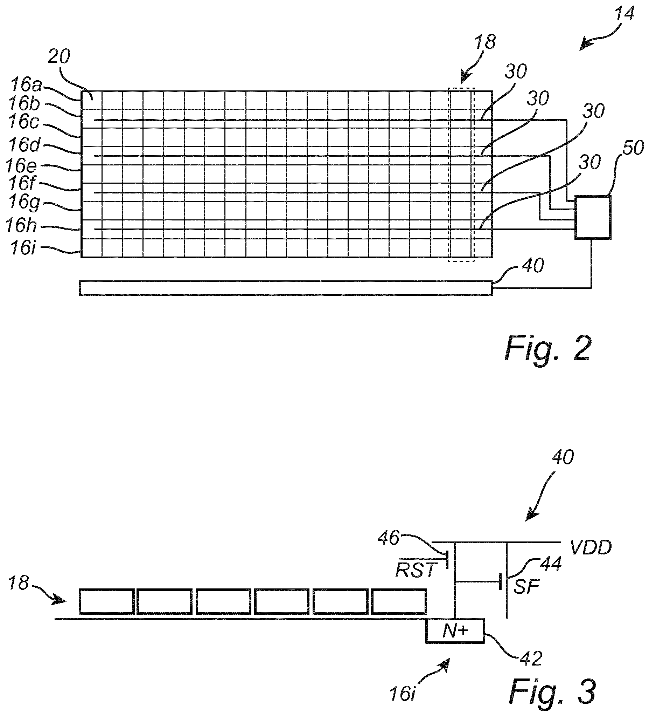

Referring now to Fig. 2, an imaging array of pixels 20 will be generally described. The imaging array may define an imaging area, which is divided into pixels 20 that are arranged in columns 18 and rows 16a-i.

Each pixel 20 may comprise a photo-active region. The photo-active region may be arranged to create an electric charge when electro-magnetic radiation is incident on the photo-active region. The electric charge may be created in proportion to an intensity of incident electro-magnetic radiation. Thus, an electric charge may be accumulated that is proportional to the intensity of incident electro-magnetic radiation during an exposure period.

The imaging array of pixels 20 may be implemented as a charge-coupled device (CCD). The CCD pixels 20 are configured to provide shifting of charges between pixels, such that the charges accumulated in the photo-active region of one pixel 20 may be transferred to another pixel to be combined (integrated) with the charges accumulated in the other pixel, as discussed above. The shifting of charges may be synchronized with a speed of movement of the device 11 in relation to the scene 10 being imaged.

The charge transfer provided between CCD pixels 20 allows accumulation of charges without adding of noise. Thus, the charges integrated in a plurality of pixels 20 may be read out with a very high signal-to-noise ratio as there is a single source of read-out noise when reading out the signal.

Accumulation of charges ensures that a relatively large amount of charges is provided in a pixel 20, such that a signal level may be read with a high signal-to-noise ratio. However, this also implies that there is a risk that the signal level may saturate and exceed a full well capacity of a pixel 20. Once the full well capacity has been reached, further accumulation of charges will not contribute to a read out signal and it will no longer be possible to accurately know an intensity level of incident electro-magnetic radiation. Further, there is a risk that charges will flow to adjacent pixels 20 through blooming such that saturation of a pixel 20 may affect also the signal read out from adjacent pixels 20.

The imaging sensor 14 may comprise one or more non-destructive read-out structures 30. The non-destructive read-out structure 30 may be associated with a row 16 within the array. Here, a plurality of non-destructive read-out structures 30a-d are illustrated being associated with rows 16b, 16d, 16f, and 16h of the array.

The imaging sensor 14 may further comprise one or more destructive read-out structures 40. The destructive read-out structure 40 may be associated with a row 16 in the array of pixels 20 and may be configured to accurately read information the pixels 20 of the row 16.

The destructive read-out structure 40 may be implemented in conventional technology of imaging sensors for reading out image information, such as reading image information through a floating diffusion node, to which charges in a column are transferred.

As discussed above, TDI imaging may involve integration of charges in a plurality of rows. As used herein, the row in which integration of charges is started is referred to as a first row 16a. Further, a row in which a signal level may be accurately read by the destructive read-out structure 40 is referred to as a second row 16i. There may be a plurality of rows between the first row 16a and the second row 16i. Further, the first row 16a and the second row 16i may be rows at edges of the array, but one or more of the first row 16a and the second row 16i may alternatively be rows arranged within the array such that there are rows on both sides of the first row 16a and the second row 16i, respectively.

The non-destructive read-out structure 30 may allow sensing a signal level in a pixel 20, such that the signal level may be monitored to determine whether the accumulated charges in the pixel 20 is close to saturation. This implies that monitoring of the amount of accumulated charges may be provided, which may further be used for controlling or improving of acquisition of a TDI image.

Using the non-destructive read-out structure 30, knowledge of at least an estimate of the signal level in a column 18 of the array may be used for improving acquiring of an image with the imaging sensor 14. The non-destructive read-out structure 30 may be arranged at an intermediate row 16b, 16d, 16f, 16h of the array, i.e. at a row which is between the first row 16a and the second row 16i in a direction of transfer of charges within the array.

Although non-destructive read-out structure 30 is schematically illustrated for several intermediate rows 16b, 16d, 16f, 16h of the array, below it will mainly be referred only to one intermediate row 16b for brevity. It should be understood that the discussion in relation to the intermediate row 16b may also apply to non-destructive read-out structures 30 associated with any further intermediate rows.

The information of the non-destructively sensed signal level may be used in several different manners, as will be described in further detail below.

The non-destructively sensed signal level may provide image information so as to contribute to forming of an image. The non-destructive sensing of the signal level may provide an estimate of the accumulated charges in the pixels 20 at the intermediate row 16b. Although the signal level is not necessarily read with equally high accuracy as a signal level read out by the destructive read-out structure 40, the non-destructively sensed signal level may still provide a value that is useful for representation in an image.

Thus, the imaging sensor 14 may be configured to sense signal levels at one or more stages corresponding to intermediate rows 16b and may also be configured to read out TDI signals by the destructive read-out structure 40. The multiple indications of amount of incident electro-magnetic radiation may be used in forming an image value.

An image processor may be configured to form an image based on acquired image information. The image processor may thus select TDI signals which are accurately read out by the destructive read-out structure 40. However, if the signal read by the destructive read-out structure 40 is saturated (corresponding to a full well capacity), the signal value may not be reliable. In such case, the image processor may replace the destructively read signal level by a non-destructively sensed signal level.

Naturally, the intensity of incident electro-magnetic radiation is different at different columns 18 of the array. This implies that an amount of accumulated charges is different in different columns 18 and that the signal level may saturate in some columns 18 while not saturating in others. The image processor may then select to use image information detected at different rows 16 for the different columns 18. In order to correctly represent the different intensity levels for the different columns 18, an exposure time for obtaining the image information that is selected for a column 18 may need to be taken into account. The exposure time is related to at which row the image information selected for the column 18 was obtained. By enabling that image information is sensed in a plurality of different rows, a large range of different intensity levels may be detected, thus providing a high dynamic range of the image.

The non-destructively sensed signal levels and the destructively sensed signal levels may be transferred by the imaging sensor 14 to an external unit, e.g. an external unit comprising an image processor. Thus, the imaging sensor 14 may be configured to always sense a plurality of different signal levels for each image point to be formed in an image such that the image processor may produce an image with a high dynamic range. The imaging sensor 14 may package the image information into a single data packet which may be transferred to the external unit. Alternatively, image information from the non-destructive read-out structure 30 and the destructive read-out structure 40 may be separately provided and combined into a single image in the external unit. Thus, the imaging sensor 14 need not necessarily process image information or even control a procedure for acquiring image information based on the non-destructive sensing of signal levels. Rather, the signal levels sensed by the non-destructive read-out structure 30 may only be used as additional image information.

However, according to an alternative embodiment, the non-destructively sensed signal levels may instead or additionally be used for controlling read-out of TDI signals.

The non-destructively sensed signal level may be provided as an input to a controller 50. The controller 50 may take a decision for controlling acquisition of image information based on the non-destructively sensed signal level. Since the signal level may be different for different columns 18 in the array, the controller 50 may be configured to separately control the columns 18 such that the read-out of TDI signals may be selectively performed for a column 18 or performed using differently controlled properties for different columns 18.

The non-destructive sensing of the signal level may be performed in relation to a single threshold level. Thus, the non-destructively sensed signal level may be represented as a single bit indicating whether the signal level is above or below the threshold level. The threshold level may be set close to a saturation level, such as at 80% of the saturation level, and may then be used by the controller 50 for controlling an action based on the input from the non-destructive read-out structure 30.

However, it should be realized that the signal level may be non-destructively sensed in a more accurate manner. Thus, the non-destructively sensed signal level may e.g. be digitized using a multi-bit ADC, e.g. digitizing the signal level using 8, 10 or 12 bits. The input to the controller 50 may thus provide a more accurate information on the signal level which may be used for advanced controlling of the read-out of image information.

The controller 50 may use the input in order to control a gain or sensitivity of destructive read-out structure 40. Thus, the gain may be adjusted in relation to the non-destructively sensed signal level so as to adapt the read-out by the destructive read-out structure 40 to the expected signal level to be detected.

The gain setting may affect signal-to-noise ratio and also affect a maximum signal level that may be read out from the pixel 20, e.g. a voltage swing that is available in a read transistor. Thus, the controller 50 may be configured to adjust the gain setting such that the destructive read-out structure 40 may determine the signal level with a high signal-to-noise ratio while not exceeding an available voltage swing of the read transistor.

The gain setting may be adjusted by changing a capacitance of a floating diffusion node used for reading out image information. The capacitance may be reduced in order to increase conversion gain in reading out image information.

The controller 50 may be configured to individually set the gain settings for each of the columns 18, such that the signal level for each of the pixels 20 in the second row 16i is read using an appropriate gain.

The controller 50 may additionally or alternatively use the input in order to control splitting of accumulated charges in a column 18 into at least two charge packages. This may imply that an amount of charges is reduced such that the signal level exceeding a saturation level is avoided for the column 18.

The controller 50 may be configured to selectively control splitting of accumulated charges. Thus, charge splitting may be performed e.g. based on a non-destructively sensed signal level exceeding a threshold.

The splitting of accumulated charges may form a first charge package and a second charge package.

The first charge package may be transferred along the column 18 to continue accumulation of charges based on the first charge package. Eventually, the first charge package may reach the second row 16i and be destructively read by the destructive read-out structure 40.

The second charge package may be removed from accumulation, e.g. by dumping the second charge package into a drain. The second charge package may first be detected, e.g. by a destructive read-out, before being dumped. This implies that the reading of a signal level of the second charge package may be combined with a reading of the first charge package in order to form a combined representation of a total amount of incident light on the column 18 of pixels 20.

If the second charge package is drained without first being measured, an indication that a splitting of the accumulated charges was performed may be stored, such that the splitting of charges may be taken into account when determining a total amount of incident light on the column 18 of pixels 20.

According to an alternative, the accumulated charges at a row 16 of the array may be generally performed, splitting the accumulated charges into a first charge package and a second charge package. The second charge package may be non-destructively sensed using the non-destructive read-out structure 30. Then, a decision on how to handle the second charge package may be taken based on the non-destructively sensed signal level.

If a low signal level of the second charge package is sensed, the second charge package may be re-merged with the first charge package and then the re-merged charge packages may be transferred along the column 18 for further accumulation of charges.

If a high signal level of the second charge package is sensed, the second charge package may be dumped in order to avoid the accumulated charges to exceed a saturation level of pixels 20. The second charge package may possibly be destructively measured before being dumped, such that a reading of a signal level of the second charge package may contribute to image information of the intensity incident on the column 18. The first charge package may be transferred along the column 18 for further accumulation of charges and for destructively reading out a TDI signal at the second row 16i.

It should also be understood that splitting of charges may always be performed (i.e. regardless of amount of accumulated charges) to split accumulated charges to a first and second charge package. This implies that a risk of the accumulated charges exceeding a saturation level is decreased. The first charge package may be transferred along the column for further accumulation, whereas the second charge package may be drained, possibly after being destructively measured. Thus, one or two readings of signal levels may be provided and a lower risk of exceeding a saturation level may be provided. The imaging sensor 14 may further be configured to non-destructively sense either the first and second charge package in order to allow using the non-destructively sensed signal level as further image information for forming an image.

The splitting of accumulated charges may be set to split the accumulated charges into fixed fractions. This may be achieved by e.g. associating two different transfer regions with different gate areas such that a fraction of the accumulated charges being transferred to each transfer region is dependent on a relation between the gate areas.

The splitting of charges into fixed fractions may imply that a relation between the first charge package and the second charge package may be known such that an estimate of a total amount of charges generated in the column 18 may be provided based solely on reading out a TDI signal based on the first charge package being transferred for further accumulation.

The splitting of accumulated charges may alternatively be based on transferring charges into a first well or bucket, which is configured to accept a limited amount of charges. A second well or bucket is arranged close to the first well, such that when a limit of charges of the first well is exceeded, excessive charges will flow into the second well.

The splitting of charges using the first and second wells may be selectively performed based on a non-destructive sensing that the accumulated charges exceed a threshold. The charges may then be filled into the first well having a known capacity for receiving charges and the excessive charges may flow into the second well. The charges in the first well may be dumped without measuring the charges (as the capacity of the first well is known). The non-destructively sensed signal level may provide an indication whether the first well will be filled so that the splitting of charges may only be triggered when the first well will be filled and excessive charges may be provided to the second well.

The charge package in the second well may be transferred along the column 18 for further accumulation and for destructively sensing the signal level at the second row 16i. An indication that the dumping of charges was performed at the intermediate row 16b may be stored and used for correctly interpreting the image information destructively sensed at the second row 16i.

According to an alternative, accumulated charges may always be transferred to a first well within a row in the array. If the charge package in the first well fills the well, excessive charges may flow into a second well. The second charge package in the second well may be detected, e.g. using a destructive read-out at the row in the array so as to detect how much charge was removed in the splitting of charges. The first charge package in the first well may be transferred along the column 18 and detected at a bottom row of the array. Thus, one or two readings of signal levels of the first and second charge packages may be provided and a lower risk of exceeding a saturation level may be provided. The imaging sensor 14 may further be configured to non-destructively sense either the first and second charge package in order to allow using the non-destructively sensed signal level as further image information for forming an image.

The controller 50 may additionally or alternatively use the input in order to control the destructive read-out structure 40 to selectively read out TDI signals at the second row 16i. Thus, the imaging sensor 14 may be controlled in relation to the non-destructively sensed signal level so as to activate read-out by the destructive read-out structure 40 if it is expected that the signal level is close to a saturation level.

The imaging sensor 14 may thus be provided with a plurality of destructive read-out structures 40, which may be selectively controlled. The imaging sensor 14 may be provided with a destructive read-out structure 40 at a row associated with the intermediate row 16b at which non-destructive read-out is available. Thus, at a row close to the intermediate row 16b, destructive read-out is available. The controller 50 may thus activate the destructive read-out for a column 18 based on the non-destructively sensed signal level exceeding a threshold. The controller 50 may further control the destructive read-out per column 18, such that for columns having a signal level below the threshold, the destructive read-out may not be activated and accumulation of charges may be allowed to continue over further rows.

The selected destructive read-out may enable reading a TDI signal before the accumulated charges exceed a saturation level. This implies that a reliable TDI signal value may be destructively read out. The read out TDI signal may be associated with an indication of a row at which the signal was read in order to distinguish from TDI signal values read out at other rows of the array.

Pixels 20 in a row of the imaging sensor 14 at which destructive read-out is to be selectively provided may comprise an additional transfer gate. Thus, the additional transfer gate may be selectively activated to divert the accumulated charges away from an integrating path along columns of the array. The additional transfer gate may control shifting of charges into a floating diffusion junction node, where the charges may be destructively sensed.

If the additional transfer gate is not activated, the pixel 20 may be configured to transfer charges along a column 18 of the array to continue time delay and integration of image information.

Above, different controlling functions of the controller 50 has been described. It should be realized that the controller 50 may be configured to (selectively) use one or more of the controlling functions. For instance, the controller 50 may be configured to combine adjusting a gain of the destructive read-out structure 40 and selectively activating the destructive read-out structure 40.

The controller 50 may be implemented as or in a central processing unit (CPU). The controller 50 may thus be a general-purpose processing unit, which may be loaded with a computer program product in order to allow the processing unit to perform the desired operations to provide the functionality of the controller 50. The controller 50 may alternatively be implemented as a special-purpose circuitry for providing only specific logical operations. Thus, the controller 50 may be provided in the form of an application-specific integrated circuit (ASIC), an application-specific instruction-set processor (ASIP), a field-programmable gate array (FPGA) or a digital signal processor (DSP).

Referring now to Fig. 3, a destructive read-out structure 40 will be described in further detail.

The destructive read-out structure 40 may be provided at the second row 16i of the array. In Fig. 3, a single column 18 is illustrated, wherein charges are transferred based on signals on transfer gates through the column 18.

In the second row 16i, charges are collected in a floating diffusion node 42. The floating diffusion node 42 is connected to a gate of a source follower 44, which acts as an amplifier for reading out the voltage of the floating diffusion node 42. The source follower 44 may be connected to a select transistor for reading out the signal at the floating diffusion node 42.

The destructive read-out structure 40 may further be provided with a reset transistor 46, which may be used to reset the floating diffusion node 42 and clearing charges in the floating diffusion node 42.

It should be realized that the destructive read-out structure 40 may be provided in numerous variants, as will be acknowledged by a person skilled in the art. For instance, numerous variants of number of transistors used in reading out the signal at the floating diffusion node 42 exist.

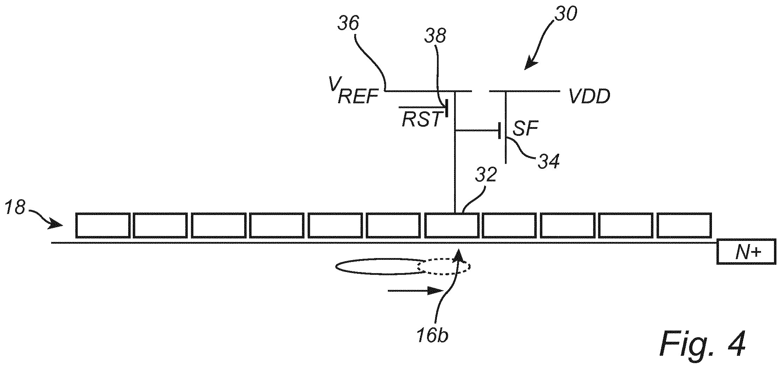

Referring now to Fig. 4, a non-destructive read-out structure 30 will be described in further detail.

The non-destructive read-out structure 30 may be provided at an intermediate row 16b. In Fig. 4, a single column 18 is illustrated, wherein charges are transferred based on signals on transfer gates through the column 18. As illustrated in Fig. 4 charges may be transferred past the non-destructive read-out structure 30 such that the sensing of the signal level in the intermediate row 16b does not affect accumulation of charges in the column 18.

In the intermediate row 16b, a floating gate amplifier is illustrated. The floating gate amplifier is connected to a transfer gate 32 of a pixel 20, which is controlled for transferring charges from the pixel 20 to an adjacent pixel.

The transfer gate 32 may be left floating and may be connected to a gate of a source follower 34. The charge package in the pixel 20 will modulate a gate potential of the source follower 34, which may allow the signal level of the charge package to be detected.

The gate of the source follower 34 may further be connected to a reference voltage 36. The charge package in the pixel 20 may thus pull down the voltage at the gate of the source follower 34 from the reference voltage in dependence of the amount of accumulated charges in the pixel 20. Thus, the floating gate voltage may be detected via the source follower 34, which acts as an amplifier for reading out the floating gate voltage.

The reference voltage 36 may be set to an adequate value for allowing reading a signal level of accumulated charges in the pixel 20. The reference voltage 36 may further be changed to cause pushing of charges to the adjacent pixel by supplying a signal to the transfer gate 32. In an embodiment, the reference voltage 36 may be 1.5V for reading a signal from the pixel 20 and may be lowered to e.g. -1.5V, for transferring charges from the pixel 20 by repelling charges and thus pushing charges to the adjacent pixel.

The non-destructive read-out structure 30 may further be provided with a reset transistor 38, which may be used to reset the pixel 20 after the charge package has been transferred to the adjacent pixel.

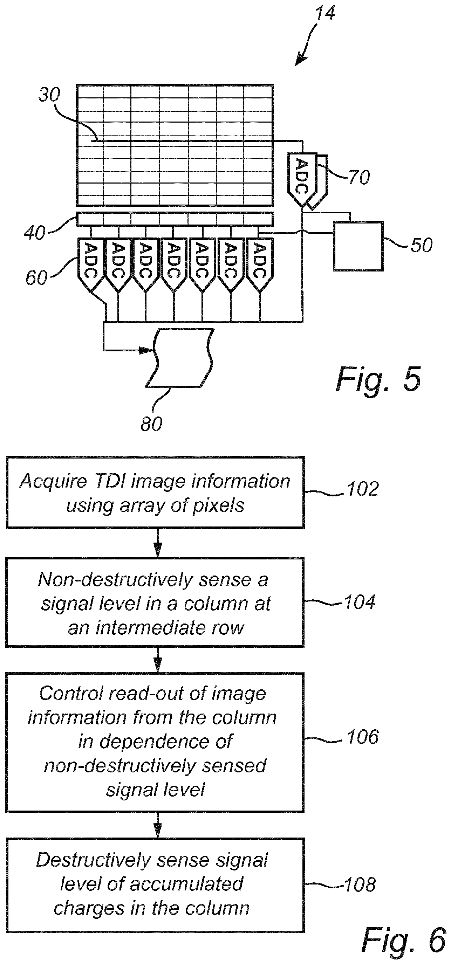

Referring now to Fig. 5, forming of image information will be further described.

As shown in Fig. 5, the imaging sensor 14 may further comprise at least one analog-to-digital converter (ADC) 60. The ADC 60 may be connected to the destructive read-out structure 40. The ADC 60 may convert the read out TDI signal into a digital value, which may facilitate further processing of the information.

In an embodiment, the imaging sensor 14 may comprise an ADC 60 for each column 18 from which the destructive read-out structure 40 is configured to read a TDI signal. According to an alternative, a single ADC 60 may be provided for the destructive read-out structure 40. This implies that the TDI signals read out by the destructive read-out structure 40 may be sequentially provided to the ADC 60 for conversion to digital format.

The imaging sensor 14 may further comprise one or more ADCs 70 associated with the non-destructive read-out structure 30. Thus, the signal levels sensed by the non-destructive read-out structure 30 may also be converted into digital format for facilitating further processing. The digital values of the non-destructively sensed signal levels may be provided to the controller 50 for processing the signal levels and controlling image acquisition based on the signal levels.

The controller 50 may further be configured to control a gain stage for amplifying a signal before it reaches the ADC 60. The controller 50 may thus, in dependence of the non-destructively sensed signal level providing an indication of the signal level to be digitized, control the gain stage to amplify the signal to a signal level which is adapted to the resolution of the ADC 60.

The digitized TDI signals may be packaged into a dataset 80 providing information for forming a TDI image. The dataset 80 may be transferred to an external unit for further processing therein, e.g. for forming a digital image based on the information. Alternatively, the dataset 80 may be processed within the imaging sensor 14 for forming a TDI image therein, which may then e.g. be transferred to an external unit for further processing or output for being presented on a display.

The dataset 80 may further comprise additional information for forming the TDI image. For instance, the dataset 80 may comprise information relating to TDI signals read out in different rows 16 of the array based on several destructive read-out structures 40. Then, the dataset 80 may also comprise information associated with read out TDI signals to provide an indication of which row 16 the information was read from.

The dataset 80 may further comprise information relating to non-destructively sensed signal levels, which may define additional information on the amount of electro-magnetic radiation being incident on a column 18 of the array.

The dataset 80 may further comprise information relating to whether charge packages have been split and in which row 16 of the array that charge packages were split. If several charge packages have been sensed for a single column 18, the information from each of the sensed signal levels may be included in the dataset 80.

Referring now to Fig. 6, a method for controlling TDI imaging will be described.

The method comprises acquiring 102 image information using an array of pixels 20. The pixels 20 are configured to generate an electric charge proportional to intensity of electro-magnetic radiation incident on the pixel 20 and to transfer generated charges along columns 18 of the array for accumulating the generated charges in the pixels 20 along the columns 18 from a first row 16a towards a second row 16i.

The method further comprises non-destructively sensing 104 a signal level of accumulated charges in at least one column. The non-destructive sensing may be performed at an intermediate row 16b within the array, such that a signal level may be sensed before charges have been accumulated over all the pixels 20 in the entire column 18.

The non-destructively sensed signal level may provide information which may be used for improving a representation of a TDI image. Thus, the non-destructively sensed signal level may for instance be used as an indication of incident electro-magnetic radiation, if the accumulated charges in the column 18 reach a saturation level before the charges have been transferred through the entire column 18.

According to an embodiment, the method may comprise controlling 106 read out of image information from the at least one column 18 in dependence of the signal level non-destructively sensed at the intermediate row 16b. By means of the controlling, the method may enable accurate reading out of image information, e.g. avoiding that the accumulated charges have reached a saturation level and/or ensuring that settings for reading out image information is adapted to an expected signal level.

The method may further comprise at the second row 16i, destructively sensing 108 a signal level of accumulated charges in the at least one column 18. The destructive sensing may provide a more accurate reading of the amount of accumulated charges than provided by a non-destructive sensing of a signal level. Thus, the destructive sensing 108 of the signal level may be advantageously used for enabling forming of a TDI image based on the read out image information. As mentioned above, the method may be controlled such that the destructive sensing may be performed on a signal level which provides a reliable value (e.g. which is not saturated). Alternatively or additionally, the method may allow using both non-destructive sensing and destructive sensing to provide accurate readings of signal levels using the destructive sensing with a complement of non-destructively sensed signal levels which may be used when the destructive sensing is not reliable (e.g. when the signal level has exceeded a saturation level).

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A method for controlling time delay and integration, TDI, imaging, said method comprising:
acquiring (102) image information using an array of pixels (20) being arranged in rows (16) and columns (18), wherein each pixel (20) is configured to generate an electric charge proportional to intensity of electro-magnetic radiation incident on the pixel (20) and wherein the pixels (20) are configured to transfer generated charges along columns (18) of the array for accumulating the generated charges in the pixels (20) along the columns (18) from a first row (16a) in the array of pixels (20) towards a second row (16i) in the array of pixels (20);
at an intermediate row (16b) between the first (16a) and the second row (16i), non-destructively sensing (104) a signal level of accumulated charges in at least one column (18); and
at the second row (16i), destructively sensing (108) a signal level of accumulated charges in the at least one column (18).

2. The method according to claim 1, wherein the destructive sensing (108) at the second row (16i) is used for reading out image information from the at least one column (18) and wherein the method further comprises controlling (106) read out of image information from the at least one column (18) in dependence of the signal level non-destructively sensed at the intermediate row (16b).

3. The method according to claim 2, wherein said controlling (106) comprises adjusting a gain setting for reading out the image information of the at least one column (18).

4. The method according to any one of the preceding claims, further comprising reading out image information available in the at least one column at the intermediate row (16b).

5. The method according to any one of the preceding claims, further comprising splitting the accumulated charges of the at least one column (18) at the intermediate row (16b) into at least two charge packages.

6. The method according to any one of the preceding claims, wherein the non-destructive sensing (104) is performed for each column (18) and wherein the columns (18) are separately controlled.

7. The method according to any one of the preceding claims, wherein the non-destructive sensing (104) of the signal level is performed in a plurality of intermediate rows (16b, 16d, 16f, 16h).

8. An imaging sensor for time delay and integration, TDI, imaging, said imaging sensor (14) comprising:
an array of pixels (20) being arranged in rows (16) and columns (18), wherein each pixel (20) is configured to generate an electric charge proportional to intensity of electro-magnetic radiation incident on the pixel (20) and wherein the pixels (20) are configured to transfer generated charges along columns (18) of the array for accumulating the generated charges in the pixels (20) along the columns (18) from a first row (16a) in the array of pixels (20) towards a second row (16i) in the array of pixels (20);
a non-destructive read-out structure (30) associated with an intermediate row (16b) within the array of pixels (20); said read-out structure (40) being configured to sense a signal level of accumulated charges in at least one column (18) at the intermediate row (16b);
a destructive read-out structure (30) for reading out TDI signals for the at least one column (18) corresponding to accumulated charges in the pixels (20) along the column (18).

9. The imaging sensor according to claim 8, further comprising a controller (50) for controlling read-out of the TDI signal, said controller (50) being configured to control read-out of the TDI signal in dependence of the signal level sensed by the non-destructive read-out structure (30) at the intermediate row (16b).

10. The imaging sensor according to claim 9, wherein the controller (50) is configured to control a gain setting for the destructive read-out structure (40) in dependence of the signal level sensed by the non-destructive read-out structure (30).

11. The imaging sensor according to any one of claims 8-10, wherein the non-destructive read-out structure (30) comprises at least one floating gate amplifier associated with the at least one column (18).

12. The imaging sensor according to any one of claims 8-11, wherein the destructive read-out structure (40) comprises at least one floating diffusion node (42) associated with the at least one column (18).

13. The imaging sensor according to any one of claims 8-12, wherein the imaging sensor (14) is configured to read out the TDI signal at the intermediate row (16b).

14. The imaging sensor according to any one of claims 8-13, wherein the imaging sensor (14) comprises a plurality of non-destructive read-out structures (30), each non-destructive read-out structure (30) being associated with a unique intermediate row (16b, 16d, 16f, 16h) of a plurality of intermediate rows (16b, 16d, 16f, 16h).

15. The imaging sensor according to any one of claims 8-14, further comprising at least one analog-to-digital converter, ADC, (60), wherein the destructive read-out structure (40) is connected to the at least one ADC (60), and wherein the controller (50) is configured to control a level of a TDI signal read out by the destructive read-out structure (40) and transferred to the at least one ADC (60) based on a resolution of the ADC (60).
